# EUROPEAN PATENT APPLICATION

(11) **EP 2 797 196 A1**
(43) Date of publication of application: **29.10.2014**
(21) Application number: 14160465.2
(22) Date of filing: 18.03.2014
(51) Int. Cl.: H02J 3/00, H02J 1/10

(54) **Grid interconnection apparatus**

(30) Priority: 25.04.2013 JP 2013092981
(71) Applicant: Kabushiki Kaisha Yaskawa Denki, Kitakyushu-shi, Fukuoka 806-0004 (JP)
(72) Inventor: Kuboyama, Takashi, Kitakyushu-shi, Fukuoka 806-0004 (JP); Ishii, Sadao, Kitakyushu-shi, Fukuoka 806-0004 (JP); Toujinbara, Hirotaka, Kitakyushu-shi, Fukuoka 806-0004 (JP); Sadohara, Tadashi, Kitakyushu-shi, Fukuoka 806-0004 (JP)
(74) Representative: Viering, Jentschura & Partner Patent- und Rechtsanwälte

(57) **Abstract**

A grid interconnection apparatus 1 includes a voltage conversion section 11 including DC/DC converters 21a to 21d to step up or down output voltages of DC power sources 2a to 2d. The voltage conversion section 11 combines DC power outputs from the DC/DC converters 21a to 21d into combined DC power and output the DC power. A power conversion section 12 converts the DC power output from the voltage conversion section 11 into AC power, and outputs the AC power to a power grid 3. A current detector 13 detects a current input into the power conversion section 12. A voltage detector 10a to 10d detects a voltage input into the power conversion section 12. A controller 14 controls the DC/DC converters 21a to 21d to maximize the power outputs from the DC power sources 2a to 2d based on the detected current and the detected voltage.

## Description

### BACKGROUND

### FIELD OF THE INVENTION

The present invention relates to a grid interconnection apparatus.

### DISCUSSION OF THE BACKGROUND

Conventionally known grid interconnection apparatuses include a DC/DC (direct-current/direct-current) converter and a power conversion device. The DC/DC converter steps up or down voltage output from a DC power source such as a solar cell. The power conversion device converts the DC power output from the DC/DC converter into AC (alternating-current) power, and supplies the AC power to a power grid.

The grid interconnection apparatuses generally have a function known as MPPT (Maximum Power Point Tracking) control. In MPPT, based on current and voltage input from the DC power source to the DC/DC converter, the grid interconnection apparatuses control the DC/DC converter to maximize the power output from the DC power source (see, for example Japanese Unexamined Patent Application Publication No. 11-318042).

The contents of Japanese Unexamined Patent Application Publication No. 11-318042 are incorporated herein by reference in their entirety.

The conventional grid interconnection apparatuses perform MPPT control based on the current and voltage input into the DC/DC converter. When the DC/DC converter is provided in plural, it is necessary to provide a current detector to detect the current input into each of the DC/DC converters. Thus, as the number of the DC power sources connected to the grid interconnection apparatus increases, the number of the current detectors increases.

An embodiment of the present invention has been made in view of the above-described circumstances, and it is an object of the present invention to provide a grid interconnection apparatus that ensures MPPT control while eliminating or minimizing an increase in the number of current detectors.

### SUMMARY

According to one aspect of the present disclosure, a grid interconnection apparatus 1 includes a voltage conversion section 11, a power conversion section 12, a current detector 13, a voltage detector 10a, 10b, 10c, 10d, and a controller 14. The voltage conversion section 11 includes a plurality of DC/DC converters 21a, 21b, 21c, 21d configured to step up or down output voltages of a plurality of DC power sources 2b, 2c, 2d. The voltage conversion section 11 is configured to combine DC power outputs from the plurality of DC/DC converters 21a, 21b, 21c, 21d into combined DC power and output the combined DC power. The power conversion section 12 is configured to convert the DC power output from the voltage conversion section 11 into AC power, and output the AC power to a power grid 3. The current detector 13 is configured to detect a current to be input into the power conversion section 12. The voltage detector 10a, 10b, 10c, 10d is configured to detect a voltage to be input into the power conversion section 12. The controller 14 is configured to control the plurality of DC/DC converters 21a, 21b, 21c, 21d to maximize the power outputs from the plurality of DC power sources 2b, 2c, 2d based on the current detected by the current detector 13 and on the voltage detected by the voltage detector 10a, 10b, 10c, 10d.

An embodiment of the present invention provides a grid interconnection apparatus that ensures MPPT control while eliminating or minimizing an increase in the number of current detectors.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram illustrating a grid interconnection apparatus according to a first embodiment;
FIG. 2 is a diagram illustrating an exemplary specific configuration of a DC/DC converter shown in FIG. 1;
FIG. 3 is a diagram illustrating an exemplary specific configuration of a power conversion section shown in FIG. 1;
FIG. 4 is a diagram illustrating an exemplary specific configuration of a part of a controller shown in FIG. 1;
FIG. 5 is a diagram illustrating exemplary timings of MPPT control that the controller shown in FIG. 1 performs with respect to solar cells;
FIG. 6 is a flowchart of a flow of the MPPT control that the controller shown in FIG. 1 performs with respect to each of the solar cells;
FIG. 7 is a diagram illustrating other exemplary timings of MPPT control that the controller shown in FIG. 1 performs with respect to each of the solar cells;
FIG. 8 is a diagram illustrating yet other exemplary timings of MPPT control that the controller shown in FIG. 1 performs with respect to each of the solar cells;
FIG. 9 is a diagram illustrating yet still other exemplary timings of MPPT control that the controller shown in FIG. 1 performs with respect to each of the solar cells;
FIG. 10 is a diagram illustrating yet still other exemplary timings of MPPT control that the controller shown in FIG. 1 performs with respect to each of the solar cells; and
FIG. 11 is a diagram illustrating a grid interconnection apparatus according to a second embodiment.

### DESCRIPTION OF THE EMBODIMENTS

The embodiments will now be described with reference to the accompanying drawings, wherein like reference numerals designate corresponding or identical elements throughout the various drawings.

### (First embodiment)

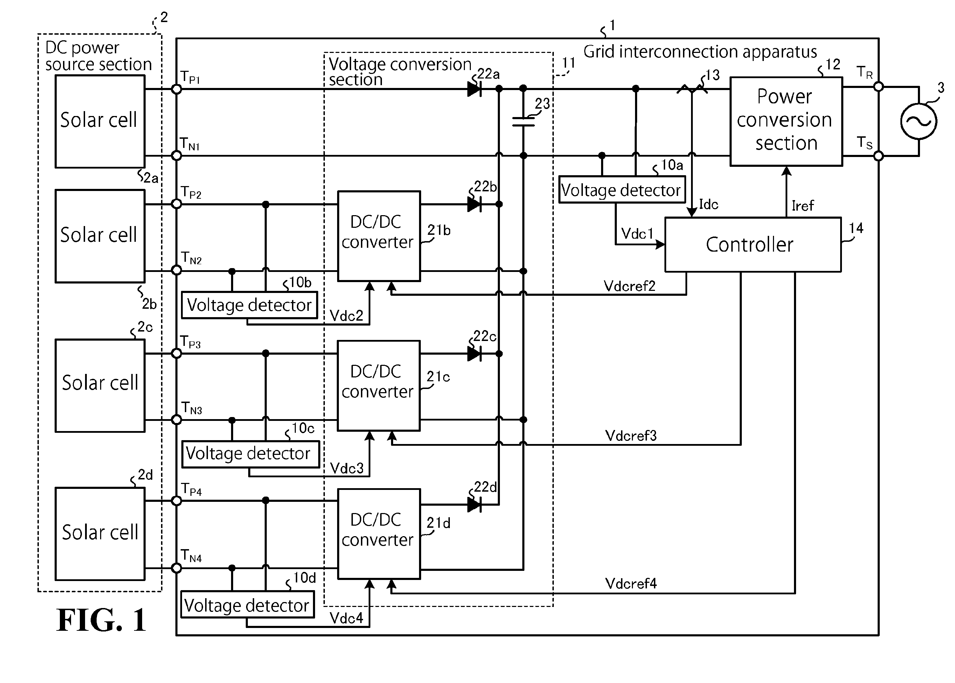

FIG. 1 is a diagram illustrating a grid interconnection apparatus according to a first embodiment. As shown in FIG. 1, a grid interconnection apparatus 1 according to the first embodiment is connected between a DC power source section 2 and a power grid 3. The grid interconnection apparatus 1 converts DC power supplied from the DC power source section 2 into AC power, and supplies the AC power to the power grid 3.

The DC power source section 2 includes a plurality of DC power sources. The DC power sources are exemplified as solar cells 2a to 2d here. Other possible examples of the DC power sources include fuel cells and batteries. While in the following description four DC power sources are connected to each other, this should not be construed as limiting the number of the DC power sources.

The grid interconnection apparatus 1 includes DC side terminals T_{P1} to T_{P4} and T_{N1} to T_{N4}, and AC side terminals T_{R} and T_{S}. The solar cell 2a is connected to the DC side terminals T_{P1} and T_{N1}, the solar cell 2b is connected to the DC side terminals T_{P2} and T_{N2}, the solar cell 2c is connected to T_{P3} and T_{N3}, and the solar cell 2d is connected to the DC side terminals T_{P4} and T_{N4}. The AC side terminals T_{R} and T_{S} are connected to the power grid 3.

The grid interconnection apparatus 1 includes voltage detectors 10a to 10d, a voltage conversion section 11, a power conversion section 12, a current detector 13, and a controller 14. The voltage conversion section 11 includes DC/DC converters 21b to 21d. The DC/DC converters 21b to 21d step up or down the outputs from the solar cells 2b to 2d.

The voltage detector 10a detects voltage (hereinafter referred to as input voltage Vdc1) to be input into the power conversion section 12, and outputs the detection result to the controller 14. The voltage detectors 10b to 10d detect voltages (hereinafter referred to as input voltages Vdc2 to Vdc4) to be respectively input into the DC/DC converters 21b to 21d. The voltage detectors 10b to 10d respectively output the detection results to the DC/DC converters 21b to 21d.

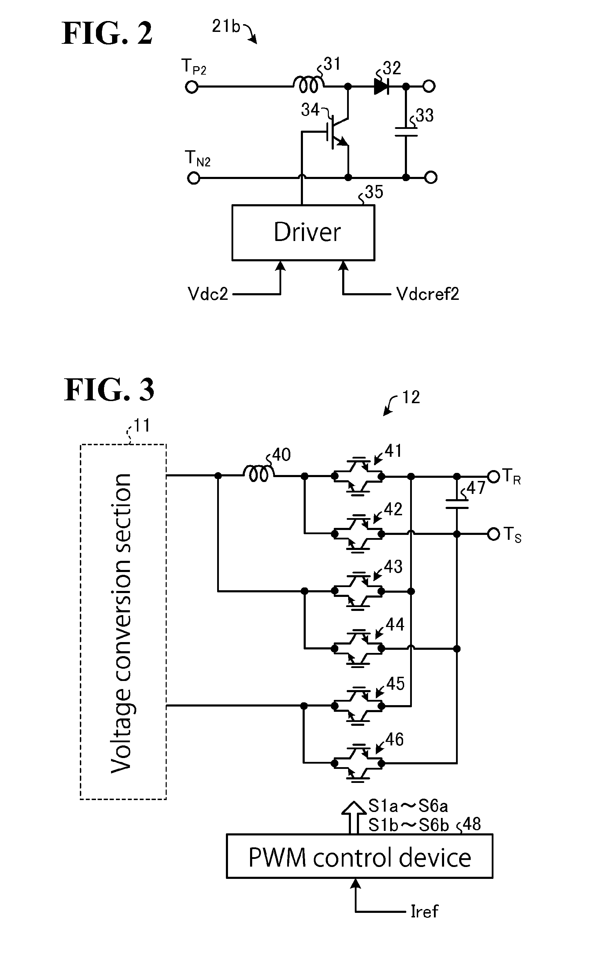

Examples of the DC/DC converters 21b to 21d are chopper converters. Other examples of the DC/DC converters 21b to 21d include, but are not limited to, DC/DC converters that use a transformer for stepping up or down. FIG. 2 is a diagram illustrating an exemplary specific configuration of the DC/DC converter 21b. The DC/DC converter 21b shown in FIG. 2 is a step-up chopper and includes a reactor 31, a diode 32, a capacitor 33, a switching element 34, and a driver 35. The DC/DC converters 21c and 21d have a similar configuration to the configuration of the DC/DC converter 21b.

In the DC/DC converter 21b, the reactor 31 accumulates energy while the switching element 34 is ON. The energy accumulated in the reactor 31 is discharged while the switching element 34 is OFF, and accumulated in the capacitor 33 through the diode 32. An example of the switching element 34 is a semiconductor element such as an IGBT (Insulated Gate Bipolar Transistor) and a MOSFET (Metal-Oxide-Semiconductor Field-Effect Transistor).

Based on a voltage command Vdcref2 output from the controller 14, the driver 35 determines a step-up ratio in such a manner that the input voltage Vdc2 detected by the voltage detector 10b matches the voltage command Vdcref2. The driver 35 generates a drive signal with a duty ratio corresponding to the determined step-up ratio, and outputs the drive signal to the switching element 34. The drive signal drives the switching element 34, and the input voltage Vdc2 changes to match the voltage command Vdcref2.

Instead of obtaining the step-up ratios of the DC/DC converters 21b to 21d at the DC/DC converters 21b to 21d, it is possible to obtain the step-up ratios at the controller 14. In this case, the voltage detectors 10b to 10d output their respective detected input voltages Vdc2 to Vdc4 to the controller 14. The controller 14 determines the step-up ratios in such a manner that the input voltages Vdc2 to Vdc4 respectively match the voltage commands Vdcref2 to Vdcref4, and outputs to the DC/DC converters 21b to 21d the step-up ratios as step-up ratio commands (which are exemplary control commands).

The DC/DC converters 21b to 21d will not be limited to the step-up configuration shown in FIG. 2. For example, depending on a relationship among the output voltages of the solar cells 2a to 2d, the DC/DC converters 21b to 21d each may be a DC/DC converter that performs step-up or step-down, or may be a DC/DC converter that performs step-down. In this case, the controller 14 may obtain step-up and -down ratios or step-down ratios of the DC/DC converters 21b to 21d, and output the ratios to the DC/DC converters 21b to 21d as step-up and -down ratio commands or step-down ratio commands (which are exemplary control commands).

As shown in FIG. 1, the voltage conversion section 11 further includes diodes 22a to 22d, and a capacitor 23. The voltage conversion section 11 combines the power output from the solar cell 2a with the power outputs from the DC/DC converters 21b to 21d. In the configuration of the voltage conversion section 11 shown in FIG. 1, the DC/DC converters 21b to 21d need not be provided with the diode 32 and the capacitor 33. The configuration of the voltage conversion section 11 shown in FIG. 1 should not be construed in a limiting sense; the voltage conversion section 11 may have any other configuration insofar as the power output from the solar cell 2a is combined with the power outputs from the DC/DC converters 21b to 21d.

The solar cells 2a to 2d are each a DC power source that varies its power generation amount in accordance with the amount of solar radiation. For example, when the solar cells 2a to 2d are oriented in different directions, the amount of power generation and the voltage vary among the solar cells 2a to 2d. The amount of power generation and the voltage may also vary among the solar cells 2a to 2d when the solar cells 2a to 2d have different specifications. As described above, the grid interconnection apparatus 1 includes the voltage conversion section 11. The voltage conversion section 11 is capable of equalizing and combining the power outputs obtained from the solar cells 2a to 2d.

The power conversion section 12 converts into AC power the DC power of the solar cells 2a to 2d combined at the voltage conversion section 11, and outputs the obtained AC power to the power grid 3. The power conversion section 12 is a matrix converter including a plurality of bidirectional switches, and has an exemplary configuration shown in FIG. 3. FIG. 3 is a diagram illustrating an exemplary specific configuration of the power conversion section 12.

As shown in FIG. 3, the power conversion section 12 is connected between the output of the voltage conversion section 11 and the AC side terminals T_{R} and T_{S}. The power conversion section 12 includes a reactor 40, bidirectional switches 41 to 46, a capacitor 47, and a PWM control device 48.

Based on a current command Iref (which is an exemplary control command) output from the controller 14, the PWM control device 48 generates drive signals S1a to S6a and S1b to S6b and outputs the drive signals S1a to S6a and S1b to S6b to the bidirectional switches 41 to 46. The drive signals S1a to S6a and S1b to S6b are for the purpose of turning ON/OFF the bidirectional switches 41 to 46. The drive signals S1a to S6a each control one-side switch of the corresponding one of the bidirectional switches 41 to 46. The drive signals S1b to S6b each control the other-side switch of the corresponding one of the bidirectional switches 41 to 46.

The method of controlling the bidirectional switches 41 to 46 is a known technique as described in, for example, Japanese Unexamined Patent Application Publication Nos. 2011-41457 and 2012-10428, and thus will not be elaborated here. An example of each of the bidirectional switches 41 to 46 is that two reverse blocking IGBTs oriented in opposite directions are connected to each other in parallel.

When the controller 14 outputs a voltage command Vdcref1 (which is an exemplary control command), described later, the PWM control device 48 may generate the drive signals S1a to S6a and S1b to S6b based on the voltage command Vdcref1, the drive signals S1a to S6a and S1b to S6b being for the purpose of turning ON/OFF the bidirectional switches 41 to 46.

An example of the power conversion section 12 is an inverter circuit of four switching elements in full bridge connection. An example of each of the switching elements constituting the inverter circuit is a semiconductor element such as IGBT and MOSFET.

Referring back to FIG. 1, the grid interconnection apparatus 1 will be further described. The current detector 13 detects a current Idc (hereinafter referred to as input current Idc) to be input into the power conversion section 12, and outputs the detection result to the controller 14. An example of the current detector 13 is a current sensor that detects current using hole elements, which are electromagnetic conversion elements.

The controller 14 controls the power conversion section 12 based on the current detected by the current detector 13 and on the voltage detected by the voltage detector 10a. Specifically, the controller 14 controls the power conversion section 12 to convert the DC power input into the power conversion section 12 into AC power, and to output the obtained AC power to the power grid 3. The controller 14 also performs MPPT control to maximize the power outputs from the solar cells 2a to 2d. The MPPT control is performed at a plurality of processing devices that adjust control commands to the power conversion section 12 and the DC/DC converters 21b to 21d. Examples of the control command to the DC/DC converters 21b to 21d include, but are not limited to, a voltage command, a step-up ratio command, and a step-down ratio command. Examples of the control command to the power conversion section 12 include, but are not limited to, a voltage command and a current command.

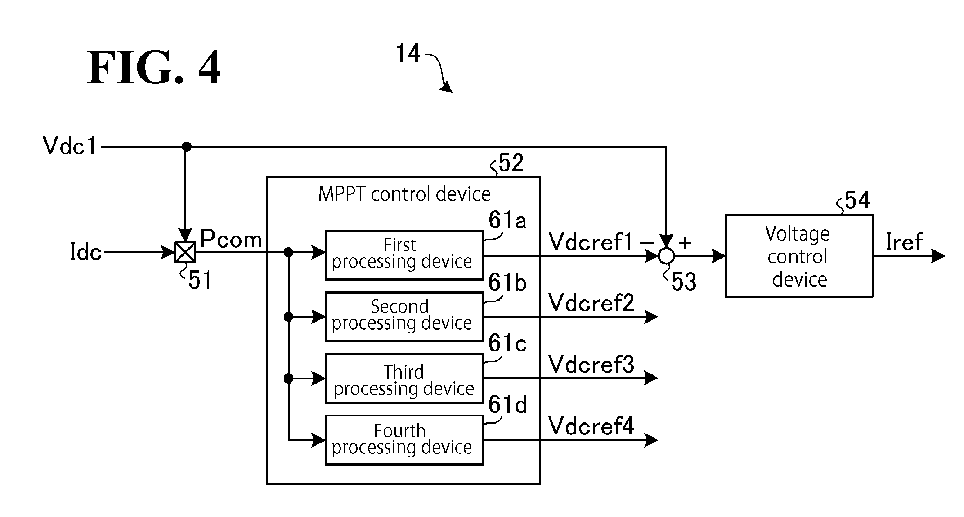

FIG. 4 illustrates an exemplary configuration of a part of the controller 14 (a part related to the MPPT control). As shown in FIG. 4, the part includes a multiplication device 51 (which is an example of the calculation device), an MPPT control device 52, a subtraction device 53, and a voltage control device 54.

The multiplication device 51 multiplies the input voltage Vdc1 by the input current Idc to obtain a power input Pcom. The power input Pcom is a value of the power input into the power conversion section 12. It is possible to convert the value into another value easier to process in the controller 14. The input voltage Vdc1 multiplied at the multiplication device 51 may be a value obtained by averaging detection results of the voltage detector 10a. Similarly, the input current Idc multiplied at the multiplication device 51 may be a value obtained by averaging detection results of the current detector 13.

The MPPT control device 52 performs MPPT control based on the power input Pcom output from the multiplication device 51. Specifically, the MPPT control device 52 performs the MPPT control to adjust the voltage commands Vrcref1 to Vdcref4 (which are exemplary control commands). The MPPT control device 52 includes a first processing device 61a, a second processing device 61b, a third processing device 61c, and a fourth processing device 61d. The first to fourth processing devices 61a to 61d (hereinafter collectively referred to as processing device 61 in some cases) respectively perform first to fourth MPPT controls respectively corresponding to the solar cells 2a to 2d.

The subtraction device 53 outputs to the voltage control device 54 a difference between the input voltage Vdc1, which is detected by the voltage detector 10a, and the voltage command Vdcref1, which is output from the MPPT control device 52. The voltage control device 54 performs proportional integral (PI) control to adjust the current command Iref so that the difference between the input voltage Vdc1 and the voltage command Vdcref1 is zero. The voltage control device 54 outputs the resultant current command Iref to the power conversion section 12.

Thus, the controller 14 uses the second to the fourth processing devices 61b to 61d to adjust the voltage commands (Vdcref2 to Vdcref4) respectively for the DC/DC converters 21b to 21d. The controller 14 uses the first processing device 61a, the subtraction device 53, and the voltage control device 54 as a processing device to perform the MPPT control of adjusting the current command Iref for the power conversion section 12. The subtraction device 53 and the voltage control device 54 may not be provided in the controller 14, and the voltage command Vdcref1 (which is an exemplary control command) of the first processing device 61a may be directly output to the power conversion section 12.

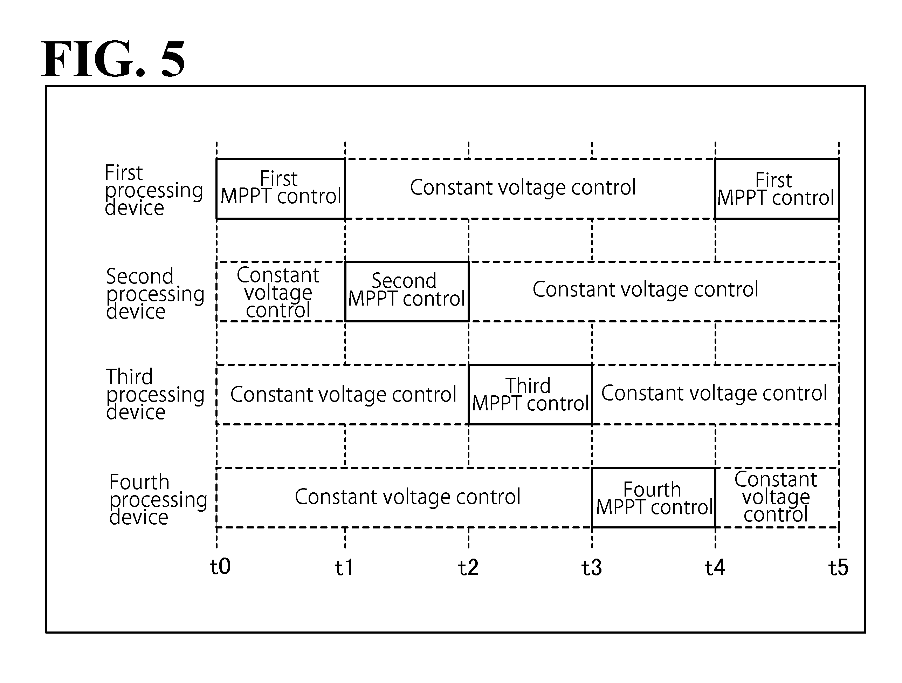

FIG. 5 is a diagram illustrating exemplary timings of the first to fourth MPPT controls respectively performed for the solar cells 2a to 2d by the controller 14. As shown in FIG. 5, the controller 14 controls the first processing device 61a to perform the first MPPT control between time points t0 to t1. In the first MPPT control, the first processing device 61a adjusts the voltage command Vdcref1 based on the power input Pcom when the voltage command Vdcref1 is increased or decreased. Then, the first processing device 61a outputs the current command Iref corresponding to the adjusted voltage command Vdcref1 to the power conversion section 12. In this manner, the first processing device 61a performs constant voltage control.

The controller 14 controls the second processing device 61b to perform the second MPPT control between time points t1 to t2. An increase or decrease in the power input Pcom corresponds to an increase or decrease in the power input of the DC/DC converter 21b. In view of this, in the second MPPT control, the second processing device 61b adjusts the voltage command Vdcref2 based on the power input Pcom when the voltage command Vdcref2 is increased or decreased. Then, the second processing device 61b outputs the adjusted voltage command Vdcref2 to the DC/DC converter 21b. In this manner, the second processing device 61b performs constant voltage control.

The controller 14 controls the third processing device 61c to perform the third MPPT control between time points t2 to t3. An increase or decrease in the power input Pcom corresponds to an increase or decrease in the power input Pcom of the DC/DC converter 21c. In view of this, in the third MPPT control, the third processing device 61c adjusts the voltage command Vdcref3 based on the power input Pcom when the voltage command Vdcref3 is increased or decreased. Then, the third processing device 61c continuously outputs the adjusted voltage command Vdcref3 to the DC/DC converter 21c. In this manner, the third processing device 61c performs constant voltage control.

The controller 14 controls the fourth processing device 61d to perform the fourth MPPT control between time points t3 to t4. An increase or decrease in the power input Pcom corresponds to an increase or decrease in the power input Pcom of the DC/DC converter 21d. In view of this, in the fourth MPPT control, the fourth processing device 61d adjusts the voltage command Vdcref4 based on the power input Pcom when the voltage command Vdcref4 is increased or decreased. Then, the fourth processing device 61d outputs the adjusted voltage command Vdcref4 to the DC/DC converter 21d. In this manner, the fourth processing device 61d performs constant voltage control.

The grid interconnection apparatus 1 repeats these first to fourth MPPT controls to maximize the power outputs from the solar cells 2a to 2d. In each of the first to fourth MPPT controls, the power input Pcom to the power conversion section 12 is used based on the input current Idc to the power conversion section 12. This eliminates the need for providing a current detector for power calculation in every DC/DC converter, 21b to 21d (hereafter collectively referred to as DC/DC converter 21 in some cases). This, in turn, eliminates or minimizes an increase in the number of the current detectors as compared with the case where the current detector is provided in every DC/DC converter 21.

The first to fourth MPPT controls do not depend on the configurations of the power conversion section 12 and the DC/DC converters 21b to 21d. Thus, the power conversion section 12 and the DC/DC converters 21b to 21d only need to operate under a command given from the controller 14. This provides an advantage in that the grid interconnection apparatus 1 is not complicated in its design.

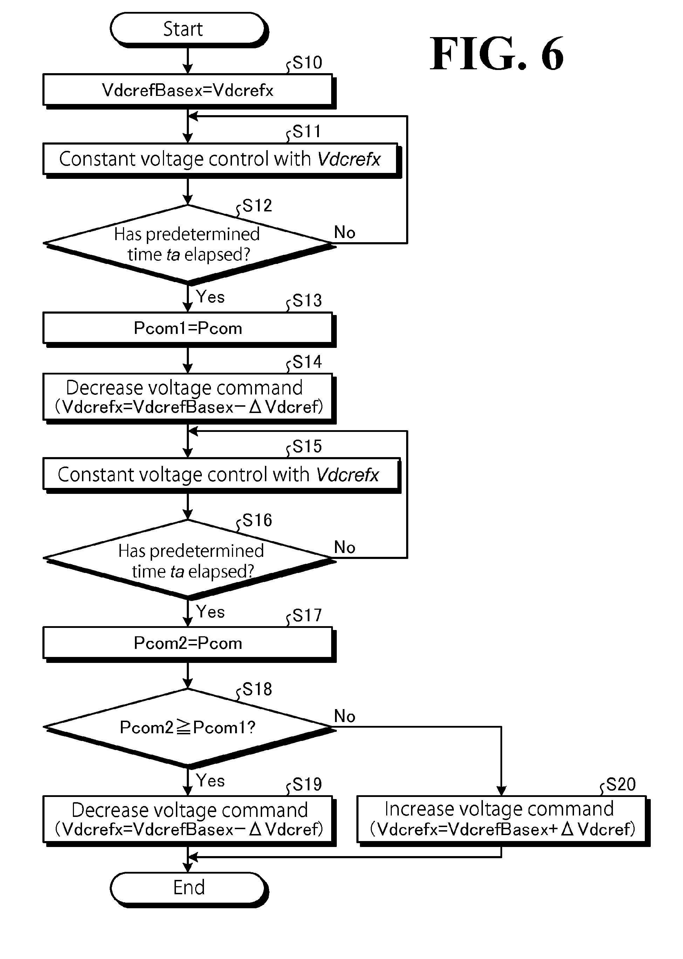

By referring to FIG. 6, details of the MPPT control performed by the controller 14 will be described. FIG. 6 is a flowchart of a flow of the MPPT control. In FIG. 6, the voltage command Vdcrefx denotes any of the voltage commands Vdcref1 to Vdcref4.

The controller 14 controls the first processing device 61a to perform a series of processings at steps S10 to S20 with respect to the voltage command Vdcref1 for a control period T. The controller 14 controls the second processing device 61b to perform the series of processings at steps S10 to S20 with respect to the voltage command Vdcref2 for the control period T. The controller 14 controls the third processing device 61c to perform the series of processings at steps S10 to S20 with respect to the voltage command Vdcref3 for the control period T. The controller 14 controls the fourth processing device 61d to perform the series of processings at steps S10 to S20 with respect to the voltage command Vdcref4 for the control period T.

As shown in FIG. 6, the controller 14 stores the value of the current output voltage command Vdcrefx as a reference voltage value VdcrefBase (step S10). The controller 14 continues constant voltage control with the voltage command Vdcrefx of a value that corresponds to the reference voltage value VdcrefBase (step S11).

Next, the controller 14 determines whether a predetermined time ta has elapsed after the processing at step S11 has started (step S 12). When determining that the predetermined time ta has not elapsed (step S12; No), the controller 14 continues the processing at step S11. When determining that the predetermined time ta has elapsed (step S12; Yes), the controller 14 sets the current power input Pcom as a power value Pcom1 (step S13).

Next, the controller 14 decreases the value of the voltage command Vdcrefx by a predetermined voltage ΔVdcref (step S 14). Thus, the value of the voltage command Vdcrefx is set at a value obtained by subtracting the predetermined voltage ΔVdcref from the reference voltage value VdcrefBase. Then, the controller 14 performs the constant voltage control with the voltage command Vdcrefx set at step S14 (step S15). For example, when the voltage command Vdcrefx at step S 14 is the voltage command Vdcref2, the controller 14 outputs the set voltage command Vdcref2 to the DC/DC converter 21b, thus performing the constant voltage control with respect to the DC/DC converter 21b.

Next, the controller 14 determines whether the predetermined time ta has elapsed after the processing at step S15 has started (step S16). When determining that the predetermined time ta has not elapsed (step S16; No), the controller 14 continues the processing at step S15. When determining that the predetermined time ta has elapsed (step S16; Yes), the controller 14 sets the current power input Pcom as a power value Pcom2 (step S17).

Then, the controller 14 compares the power value Pcom1 with the Pcom2 to determine whether the power value Pcom2 is equal to or larger than the power value Pcom1 (step S18). When the power value Pcom2 is equal to or larger than the power value Pcom1 (step S 18; Yes), the controller 14 sets the voltage command Vdcrefx obtained by subtracting the predetermined voltage ΔVdcref from the reference voltage value VdcrefBase, similarly to the processing at step S 14 (step S 19).

When the power value Pcom2 is smaller than the power value Pcom1 (step S18; No), the controller 14 sets the voltage command Vdcrefx obtained by adding the predetermined voltage ΔVdcref to the reference voltage value VdcrefBase (step S20).

The voltage command Vdcrefx set at step S 19 or S20 is maintained at a constant value until the next MPPT control is performed, and the constant voltage control corresponding to the voltage command Vdcrefx is performed for the power conversion section 12 or the DC/DC converter 21.

Thus, for half (T/2) the control period T, the controller 14 performs the processing of detecting the power input Pcom in the case where the voltage conversion section 11 is operated with the voltage command Vdcrefx of a value most recently used in the constant voltage control. Then, the controller 14 detects, as the power value Pcom2, the value of the power input Pcom in the case where the voltage conversion section 11 is operated with the voltage command Vdcrefx decreased by the predetermined voltage ΔVdcref. For the remaining period (T/2) of the control period T, the controller 14 compares the power value Pcom1 with the power value Pcom2 to adjust the voltage command Vdcrefx used in the next constant voltage control.

At step S 14, the controller 14 has been described as decreasing the value of the voltage command Vdcrefx by the predetermined voltage ΔVdcref. It is also possible for the controller 14 to increase the value of the voltage command Vdcrefx by the predetermined voltage ΔVdcref. In this case, at step S 19, the controller 14 adds the predetermined voltage ΔVdcref2 to the reference voltage value VdcrefBase, and sets the resulting value as the voltage command Vdcrefx. At step S20, the controller 14 subtracts the predetermined voltage ΔVdcref from the reference voltage value VdcrefBase, and sets the resulting value as the voltage command Vdcrefx.

The grid interconnection apparatus 1 has been described as outputting the power output from the solar cell 2a to the power conversion section 12 without the intervention of the DC/DC converter. It is also possible to eliminate the configuration of directly connecting the DC power source to the power conversion section 12. For example, the DC side terminals T_{P1} and T_{N1} and the diode 22a may not be provided in the grid interconnection apparatus 1 shown in FIG. 1, and the first processing device 61a, the subtraction device 53, and the voltage control device 54 may not be provided in the controller 14 shown in FIG. 4.

The MPPT control has been described as being performed at the first to fourth processing devices 61a to 61d in this order. It is also possible to conveniently change the processing order and timings of the MPPT control.

For example, when the change amount ΔPcom (= Pcom2 - Pcom1) of the power input Pcom at the time when the voltage command Vdcrefx is changed has dropped to or below a set value P1 in each of the processing devices 61a to 61d, then the controller 14 may determine that the maximum power is achieved and may cancel the periodic MPPT control. In this case, the controller 14 shortens the period for the MPPT controls performed by the processing devices 61 other than the processing device 61 where the periodic MPPT control is cancelled. For example, when the controller 14 cancels the fourth MPPT control, the first to third MPPT controls are repeated each for the control period T. Thus, the first to third MPPT controls are performed for a period (3T), which is three times as long as the control period T, instead of for the period (4T), which is four times as long as the control period T.

This shortens the time required for maximizing the power outputs from the solar cells 2a to 2d. A possible exemplary configuration is that after the controller 14 cancels the periodic MPPT control of one of the first to fourth processing devices 61a to 61d, the controller 14 may repeat in the one processing device 61 the MPPT control for a period longer (20T or 40T, for example) than the period of the periodic MPPT control. In this manner, the controller 14 may extend the intervals of the MPPT control. Another possible exemplary configuration is that when the change amount ΔPcom decreases to or below the set value P1 in all the processing devices 61, the controller 14 determines that the power outputs from all the solar cells 2a to 2d have been maximized, and returns the processing to the processing described by referring to FIG. 5.

When the controller 14 starts the MPPT control in each processing device 61, the controller 14 may adjust the timing of the MPPT control in accordance with the change amount ΔPcom of the power input Pcom at the time when the voltage command Vdcref is first changed (such change amount will be hereinafter referred to as initial change amount ΔPcom). For example, the controller 14 may increase the frequency of the MPPT control for a processing device 61 with a relatively larger initial change amount ΔPcom.

When the change amount ΔPcom is approximately zero, the power output from each of the solar cells 2a to 2d is approximately maximized. A larger initial change amount ΔPcom requires a longer time for the change amount ΔPcom to be zero. In view of this, the controller 14 performs the MPPT control with a frequency corresponding to the initial change amount ΔPcom. This shortens the time required for maximizing the power outputs from all the solar cells 2a to 2d.

In an internal storage device (not shown), the controller 14 may store, as history information, the time required for decreasing the change amount ΔPcom to or below the set value P1 after the MPPT control has started in each processing device 61. Based on the history information, the controller 14 may determine the frequency of each MPPT control. For example, the controller 14 increases the frequency of the MPPT control for a processing device 61 that requires a relatively longer time for the change amount ΔPcom to decrease to or below the set value P 1

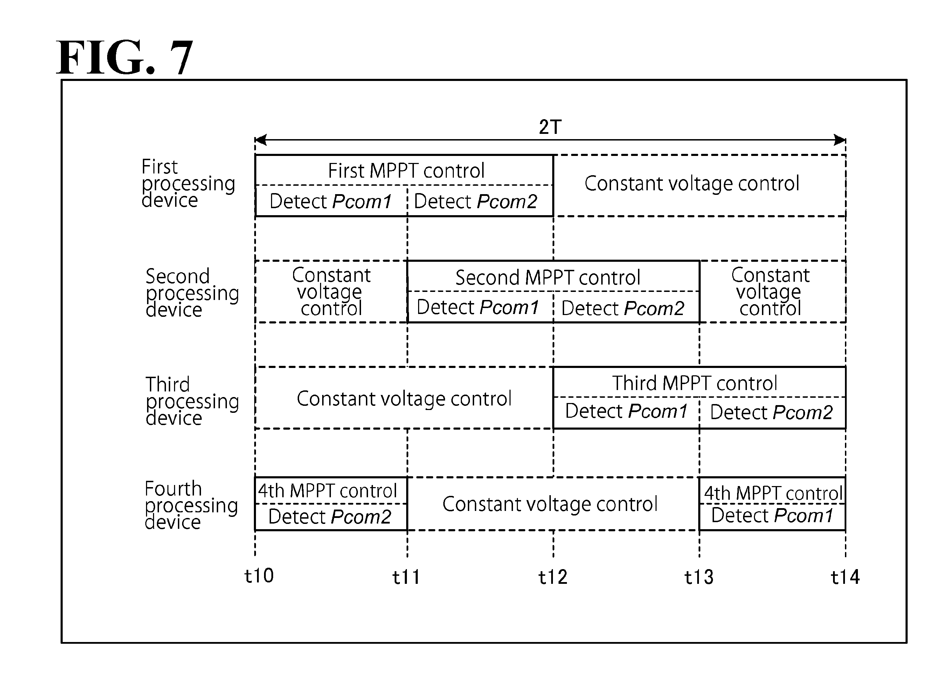

As described above, in the first to fourth MPPT controls, the power value Pcom1 is detected for half the control period T, and the power value Pcom2 is detected for half the control period T. In view of this, the controller 14 may overlap the processing periods of the first to fourth MPPT controls as shown in FIG. 7. FIG. 7 is a diagram illustrating other exemplary timings of the MPPT control performed for the solar cells 2a to 2d by the controller 14.

In the processings shown in FIG. 7, for example, the controller 14 simultaneously performs the processing of detecting the power value Pcom2 in the first MPPT control, and the processing of detecting the power value Pcom1 in the second MPPT control. For another example, the controller 14 simultaneously performs the processing of detecting the power value Pcom2 in the second MPPT control, and the processing of detecting the power value Pcom1 in the third MPPT control.

This shortens the time required for maximizing the power outputs from all the solar cells 2a to 2d. In this case, similarly to the above-described case, when the change amount ΔPcom1 of the power input Pcom decreases to or below the set value P1, the controller 14 may determine that the power output has been maximized and may stop the periodic MPPT control. When the change amount ΔPcom1 of the power input Pcom decreases to or below the set value P1 in all the processing devices 61, the controller 14 may determine that the power outputs from all the solar cells 2a to 2d have been maximized and may return the processing to the processing described by referring to FIG. 7.

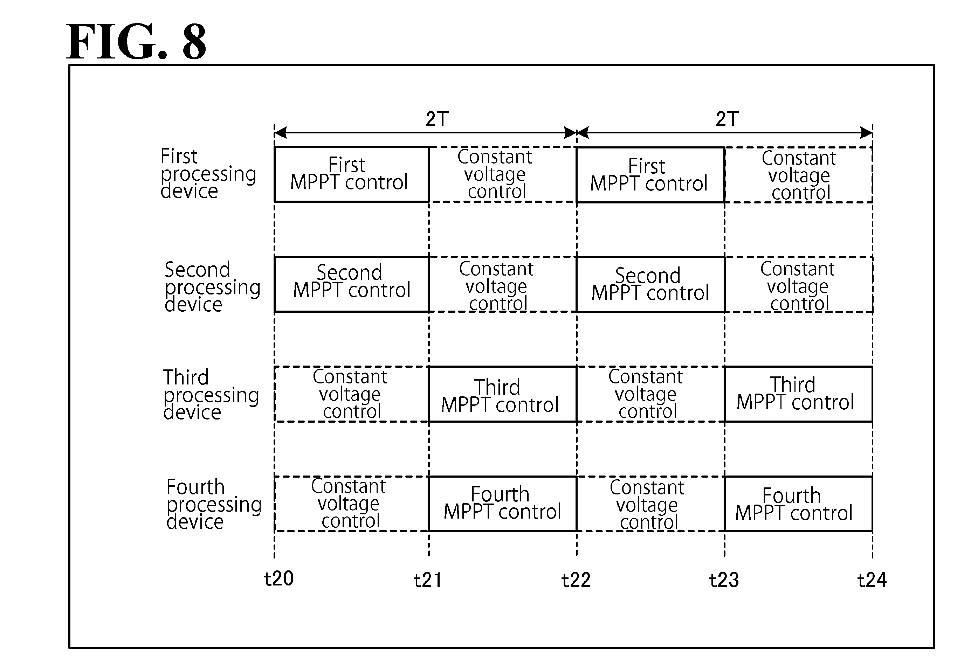

The controller 14 may simultaneously perform at least two of the first to fourth MPPT controls as shown in FIG. 8. FIG. 8 is a diagram illustrating yet other exemplary timings of the MPPT control performed for the solar cells 2a to 2d by the controller 14.

In the example shown in FIG. 8, the controller 14 repeats a series of processings that include: simultaneously performing the first MPPT control and the second MPPT control; and then simultaneously performing the third MPPT control and the fourth MPPT control. At the time when the first to fourth MPPT controls start, the power outputs from the solar cells 2a to 2d are at their minimum, and the change amount ΔPcom of the power input Pcom is a positive value. In view of this, the controller may simultaneously perform the two MPPT controls until the maximum power is achieved in at least one of the MPPT control target solar cells 2a and 2b, or in at least one of the MPPT control target solar cells 2c and 2d. This further shortens the time required for maximizing the power outputs from all the solar cells 2a to 2d.

When the controller 14 simultaneously performs at least two MPPT controls, the controller 14 may perform the first to fourth MPPT controls in the order shown in FIG. 5 when the change amount ΔPcom of the power input Pcom decreases to or below a set value P2.

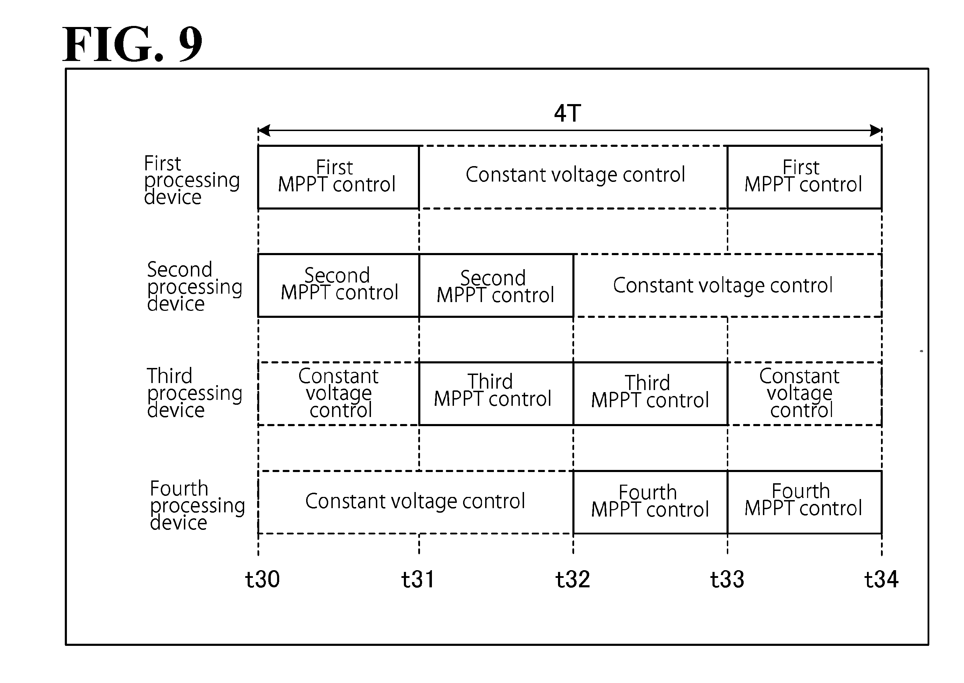

The controller 14 may simultaneously perform at least two of the first to fourth MPPT controls while changing the combination of the simultaneously performed MPPT controls. FIG. 9 is a diagram illustrating still yet other exemplary timings of the MPPT control performed for the solar cells 2a to 2d by the controller 14.

The controller 14 repeats a series of processings shown in FIG. 9 that include simultaneously performing the first and second MPPT controls, the second and third MPPT controls, the third and the fourth MPPT control, and the first and fourth MPPT controls, in this order. From the difference between the change amounts ΔPcom of the power inputs Pcom detected in these processings, the controller 14 calculates the individual change amount ΔPcom of the power input Pcom for each of the first to fourth MPPT controls, and adjusts the voltage command Vdcrefx.

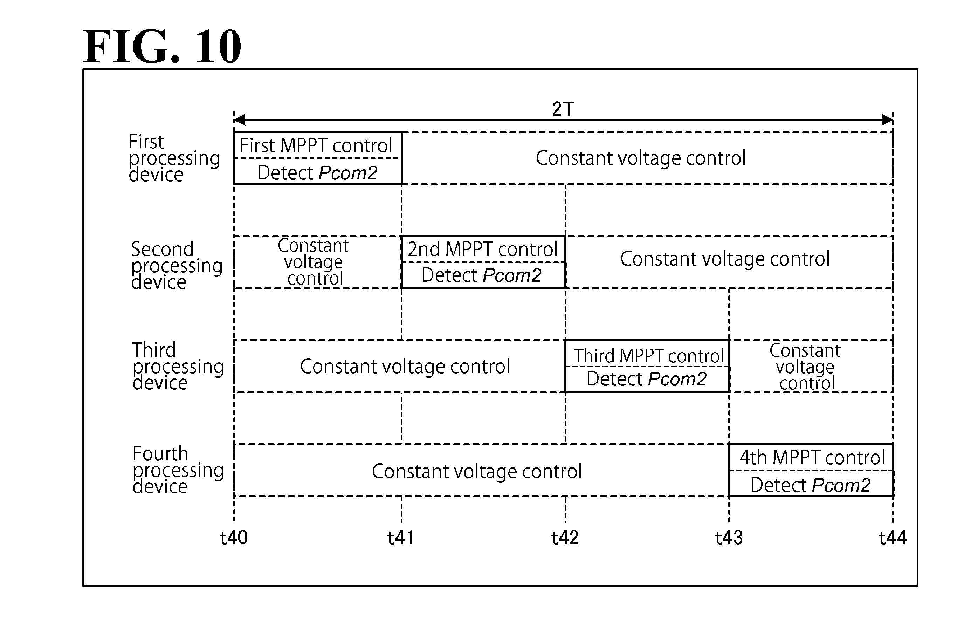

The controller 14 may also vary the timings of changing the control commands to the power conversion section 12 and the DC/DC converters 21b to 21d, sequentially change the plurality of control commands, and adjust the control commands using the detected power change. FIG. 10 is a diagram illustrating still yet other exemplary timings of the MPPT control performed for the solar cells 2a to 2d by the controller 14.

As shown in FIG. 10, the controller 14 only detects the power value P2, among the power values P1 and P2, and thus shortens the control time of each of the first to fourth MPPT controls to T/2. This further shortens the time required for maximizing the power outputs from all the solar cells 2a to 2d.

In this case, the controller 14 performs the processings at step S10, steps S15 to S20 shown in FIG. 6 as the first to fourth MPPT controls. In the processing at step S 19, the controller 14 determines whether the current power value P2 is equal to or larger than the previous power value P2, instead of determining whether the power value Pcom2 is equal to or larger than the power value Pcom1.

For example, the controller 14 sets the power value Pcom2 obtained in the first MPPT control as the previous power value Pcom2, and sets the power value Pcom2 obtained in the next second MPPT control as the current power value Pcom2, so as to adjust the voltage command Vdcref2 in the second MPPT control. For example, the controller 14 performs the processing at step S19 when the power value Pcom2 obtained in the second MPPT control is equal to or larger than the power value Pcom2 obtained in the first MPPT control; otherwise, the controller 14 performs the processing at step S20.

Similarly, the controller 14 sets the power value Pcom2 obtained in the second MPPT control as the previous power value Pcom2, and sets the power value Pcom2 obtained in the next third MPPT control as the current power value Pcom2, so as to adjust the voltage command Vdcref3 in the third MPPT control. For example, the controller 14 performs the processing at step S19 when the power value Pcom2 obtained in the third MPPT control is equal to or larger than the power value Pcom2 obtained in the second MPPT process; otherwise, the controller 14 performs the processing at step S20.

Thus, the controller 14 obtains the power input Pcom every time the voltage commands Vdcref of the first to fourth processing devices 61a to 61d are changed at different timings. Based on the change amount ΔPcom1 (current power value Pcom2 - previous power value Pcom2) of the power input Pcom, the controller 14 adjusts the voltage command Vdcref. While in the example shown in FIG. 10 the first to fourth MPPT controls are repeated in this order, this should not be construed as limiting the order of the controls. The order of the controls may be changed conveniently.

Similarly to the above-described case, when the change amount ΔPcom1 of the power input Pcom decreases to or below the set value P1, the controller 14 may determine that the power output has been maximized and may stop the periodic MPPT control. When the change amount ΔPcom1 of the power input Pcom decreases to or below the set value P1 in all the processing devices 61, the controller 14 may determine that the power outputs from all the solar cells 2a to 2d have been maximized and may return the processing to the processing described by referring to FIG. 10.

Thus, even though the controller 14 changes the timing of changing the control commands in the MPPT control for the power conversion section 12 and the DC/DC converters 21b to 21d, the power conversion section 12 and the DC/DC converters 21b to 21d may only need to operate by a given control command; thus, no special processing is necessary.

### (Second Embodiment)

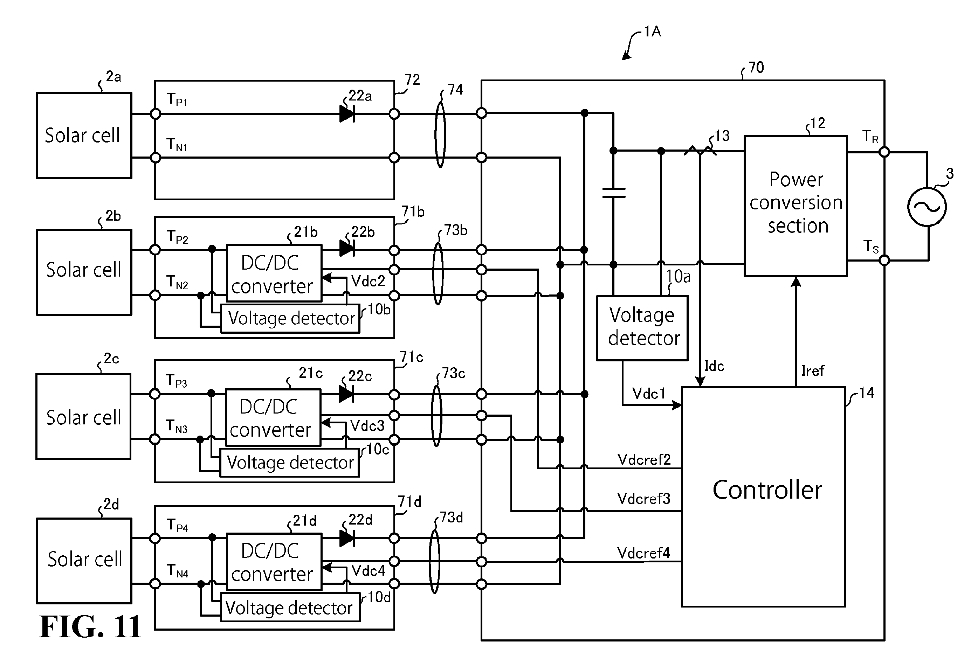

Next, a grid interconnection apparatus according to a second embodiment will be described. FIG. 11 is a diagram illustrating a configuration of the grid interconnection apparatus according to the second embodiment. Identical reference numerals designate the same or corresponding components throughout the first and second embodiments, and the description already given in the first embodiment will not be elaborated here.

As shown in FIG. 11, a grid interconnection apparatus 1A according to the second embodiment includes a first unit 70, second units 71b to 71d, and a third unit 72. The first unit 70 is separate from the second units 71b to 71d and the third unit 72.

The first unit 70 and the second units 71b to 71d are connected to each other through cables 73b to 73d. The cables 73b to 73d each include a pair of DC cables and a voltage command cable. The pair of DC cables are conductive wires through which to supply DC power from the second units 71b to 71d to the first unit 70. The voltage command cables are conductive wires through which to supply the voltage commands Vdcref2 to Vdcref4 respectively to the second units 71b to 71d from the first unit 70. The first unit 70 is connected to the third unit 72 through a cable 74. The cable 74 includes a pair of DC cables similar to the pair of DC cables in the cables 73b to 73d.

Thus, in the grid interconnection apparatus 1A, the second units 71b to 71d and the third unit 72 are separate from the first unit 70. This ensures that the grid interconnection apparatus 1A is distributed over a wider area of space, facilitating installation of the grid interconnection apparatus 1A. This also facilitates maintenance of the DC/DC converters 21b to 21d.

While in the example shown in FIG. 11 the second units 71b to 71d are separate from the third unit 72, the components included in the second units 71b to 71d and the third unit 72 may be accommodated in a single unit. In this case, the cables 73b to 73d and the cable 74 may be formed as a single cable. It is also possible to accommodate the components of the second units 71b to 71d in a single unit, so that the grid interconnection apparatus 1A is made up of three units.

Obviously, numerous modifications and variations of the present disclosure are possible in light of the above teachings. It is therefore to be understood that within the scope of the appended claims, the present disclosure may be practiced otherwise than as specifically described herein.
- 1, 1A: System coupling device
- 2: DC power source section
- 2a to 2d: Solar cell
- 3: Power grid
- 10a to 10b: Voltage detector
- 11: Voltage conversion section
- 12: Power conversion section
- 13: Current detector
- 14: Controller
- 21b to 21d: DC/DC converter
- 22a to 22d: Diode
- 23: Capacitor
- 51: Multiplication device
- 52: MPPT control device
- 53: Subtraction device
- 54: Voltage control device
- 61a: First processing device
- 61b: Second processing device
- 61c: Third processing device
- 61d: Fourth processing device
- 70: First unit
- 71b to 71d: Second unit
- 72: Third unit
- 73b to 73d: Cable
- 74: Cable

## Claims

1. A grid interconnection apparatus 1, **characterized by**:
a voltage conversion section 11 comprising a plurality of DC/DC converters 21a, 21b, 21c, 21d configured to step up or down output voltages of a plurality of DC power sources 2b, 2c, 2d, the voltage conversion section 11 being configured to combine DC power outputs from the plurality of DC/DC converters 21a, 21b, 21c, 21d into combined DC power and output the combined DC power;
a power conversion section 12 configured to convert the DC power output from the voltage conversion section 11 into AC power, and output the AC power to a power grid 3;
a current detector 13 configured to detect a current to be input into the power conversion section 12;
a voltage detector 10a, 10b, 10c, 10d configured to detect a voltage to be input into the power conversion section 12; and
a controller 14 configured to control the plurality of DC/DC converters 21a, 21b, 21c, 21d to maximize the power outputs from the plurality of DC power sources 2b, 2c, 2d based on the current detected by the current detector 13 and on the voltage detected by the voltage detector 10a, 10b, 10c, 10d.

2. The grid interconnection apparatus 1 according to claim 1,
wherein the voltage conversion section 11 is configured to combine DC power output from another DC power source 2a different from the plurality of DC power sources 2b, 2c, 2d with the DC power outputs from the plurality of DC/DC converters 21a, 21b, 21c, 21d, and configured to output the combined DC power, and
wherein based on the current detected by the current detector 13 and on the voltage detected by the voltage detector 10a, 10b, 10c, 10d, the controller 14 is configured to control the power conversion section 12 to maximize the power output from the other DC power source 2a.

3. The grid interconnection apparatus 1 according to claim 1 or 2, wherein the controller 14 comprises a plurality of processing devices 61b, 61c, 61d each configured to adjust at least one command among a voltage command, a step-up ratio command, and a step-down ratio command as a control command to each of the plurality of DC/DC converters 21a, 21b, 21c, 21d, so as to maximize each of the power outputs from the plurality of DC power sources 2b, 2c, 2d.

4. The grid interconnection apparatus 1 according to claim 2, wherein the controller 14 comprises
a plurality of processing devices 61b, 61c, 61d each configured to adjust at least one command among a voltage command, a step-up ratio command, and a step-down ratio command as a control command to each of the plurality of DC/DC converters 21a, 21b, 21c, 21d, so as to maximize each of the power outputs from the plurality of DC power sources 2b, 2c, 2d, and
a processing device 61a configured to adjust at least one command among a current command and a voltage command as a control command to the power conversion section 12, so as to maximize the power output from the other DC power source 2a.

5. The grid interconnection apparatus 1 according to claim 3 or 4,
wherein the controller 14 comprises a calculation device 51 configured to calculate a power input into the power conversion section 12 based on the current detected by the current detector 13 and on the voltage detected by the voltage detector 10a, 10b, 10c, 10d, and
wherein the plurality of processing devices 61a, 61b, 61c, 61d are each configured to perform adjustment processing of adjusting the control command based on a change amount of the power input calculated by the calculation device 51 when the control command is changed.

6. The grid interconnection apparatus 1 according to claim 5, wherein the controller 14 is configured to control at least two processing devices among the plurality of processing devices 61a, 61b, 61c, 61d to simultaneously perform the adjustment processing with respect to the control command.

7. The grid interconnection apparatus 1 according to claim 5,
wherein the controller 14 is configured to change control commands of the plurality of processing devices 61a, 61b, 61c, 61d at different timings, and
wherein the plurality of processing devices 61a, 61b, 61c, 61d are each configured to perform the adjustment processing using the change amount, the change amount being a difference between the power input calculated by the calculation device 51 when the control command of each processing device 61a, 61b, 61c, 61d is changed and the power input calculated by the calculation device 51 when the control command of another processing device among the plurality of processing devices 61a, 61b, 61c, 61d is changed.

8. The grid interconnection apparatus 1 according to any one of claims 5 to 7,
wherein the plurality of processing devices 61a, 61b, 61c, 61d are each configured to periodically perform the adjustment processing of adjusting the control command based on the change amount of the power input calculated by the calculation device 51 when the control command is changed, and
wherein when the change amount of the power input calculated by the calculation device 51 decreases to or below a set value, the plurality of processing devices 61a, 61b, 61c, 61d are each configured to stop the periodic adjustment processing with respect to the control command or extend intervals of the adjustment processing with respect to the control command.

9. The grid interconnection apparatus 1A according to any one of claims 1 to 8, further comprising:
a first unit 70 comprising:
the power conversion section 12;
the current detector 13;
the voltage detector 10a, 10b, 10c, 10d; and
the controller 14;
a second unit 71b, 71c, 71d separate from the first unit 70 and comprising at least the DC/DC converter 21b, 21c, 21d of the voltage conversion section 11; and
a cable 73b, 73c, 73d, 74 configured to couple the first unit 70 and the second unit 71b, 71c, 71d to each other.

10. The grid interconnection apparatus 1, 1A according to any one of claims 1 to 9, wherein the power converter 11 comprises a matrix converter comprising a plurality of bidirectional switches 41, 42, 43, 44, 45, 46, the matrix converter being configured to convert the DC power into the AC power using the plurality of bidirectional switches 41, 42, 43, 44, 45,46.
